# EUROPÄISCHE PATENTSCHRIFT

(11) **EP 0 637 457 B1**
(45) Veröffentlichungstag und Bekanntmachung des Hinweises auf die Patenterteilung: **18.03.1998**
(21) Anmeldenummer: 94106180.6
(22) Anmeldetag: 21.04.1994
(51) Int. Cl.: A62C 2/04, F16K 17/38, F16K 31/126

(54) **Vorrichtung zum automatischen Schliessen einer Absperrarmatur**
Device for the automatic closure of a shut-off valve
Dispositif pour la fermeture automatique d'une vanne d'arrêt

(30) Priorität: 04.08.1993 DE 4326072
(43) Veröffentlichungstag der Anmeldung: 08.02.1995
(73) Patentinhaber: RUHRGAS AKTIENGESELLSCHAFT, 45138 Essen (DE)
(72) Erfinder: Lembser, Gerhard, Dipl.-Ing., D-53639 Königswinter (DE)

(56) Entgegenhaltungen:
- AU-D- 6 780 074
- DE-B- 1 272 667
- DE-U- 7 627 697
- FR-A- 2 115 523
- FR-A- 2 310 141
- FR-A- 2 354 109
- US-A- 4 175 677
- US-A- 4 469 124
- US-A- 4 699 354

## Beschreibung

Die Erfindung betrifft eine Absperrvorrichtung, die bei einer definierten Grenzwerttemperatur automatisch schließt, mit einem Absperrelement, das durch mindestens ein eine Schließkraft hemmendes Element in Offenstellung gehalten wird.

Zur Schadensbegrenzung im Brandfall sind Anlagen, Anlagenteile sowie Rohrleitungssysteme, die von brennbaren Gasen oder Flüssigkeiten durchströmt werden, mit sicher absperrbaren Absperreinrichtungen ausgerüstet. Durch das Schließen der Absperreinrichtung wird der Durchfluß unterbrochen und dem unkontrollierten Austreten von brennbaren Gasen oder Flüssigkeiten aus einem beschädigten Anlagenteil im nachgeschalteten System entgegengewirkt.

Aus dem DE-G 76 27 697 ist eine selbsttätig schließende Absperrarmatur für insbesondere Gasleitungen bekannt. Diese weist ein Armaturengehäuse, einen Ventilsitz zwischen Gaseintritts- und Gasaustritts-Stutzen sowie einen Ventilschließkörper auf. Dieser wird durch Fixierung mittels Weichlot in Offenstellung gehalten und ist durch Federbeaufschlagung in die Schließstellung überführbar. Das Erweichen des Weichlotes im Brandfall hat das automatische Schließen der Absperrarmatur zur Folge.

Ein derartiges Absperrsystem hat den Nachteil, daß es nur auf kleinere Armaturen einer Bauart (Ventile) anwendbar ist, so daß sich deren Anwendbarkeit hauptsächlich auf den Bereich der haushaltlichen Gasversorgung beschränkt. Darüber hinaus ist deren Funktion auf die unmittelbare Temperatureinwirkung auf die Absperrarmatur selbst begrenzt.
Anlagen bzw. -teile, die im Hochdruckbereich betrieben werden, verfügen im Regelfall über sogenannte Brandschutzarmaturen, die außerhalb des Anlagengebäudes durch einen hinreichenden Sicherheitsabstand geschützt angeordnet sind und im Brandfall manuell oder durch motorische Antriebe geschlossen werden können. Die Realisierung hinreichender Sicherheitsabstände ist häufig aufgrund der örtlichen Gegebenheiten nicht möglich, oder insbesondere bei kleineren Anlagen wirtschaftlich nicht vertretbar. Hier ist im Brandfall die Betätigung der Armaturen stark beeinträchtigt bzw. nicht möglich.

Der Erfindung liegt daher die Aufgabe zugrunde, eine insbesondere im Hochdruckbereich einsetzbare automatisch schließende Absperrvorrichtung einfacher Bauweise zu schaffen, die bei ungewöhnlichem Temperaturanstieg in deren Umgebung zuverlässig und selbsttätig schließt.

Erfindungsgemäß wird diese Aufgabe bei einer Absperrvorrichtung der eingangs genannten Art dadurch gelöst, daß die Absperrvorrichtung als die Schließkraft hemmendes Element mindestens einen druckbeaufschlagten volumenveränderlichen Hohlkörper aufweist, der als Faltenbalg oder als Druckkissen ausgebildet ist, und mindestens eine Sollbrucheinrichtung aufweist, die aus einem Material besteht, dessen Schmelztemperatur auf eine definierte Grenzwerttemperatur eingestellt ist.

Eine derartige Schließvorrichtung hat den Vorteil, daß sie eine einfache und robuste Konzeption aufweist. Die Absperrarmatur wird dabei durch ein die Schließkraft hemmendes Element in Offenstellung gehalten. Vorteilhafterweise kann das Element direkt vom druckbeaufschlagten volumenveränderlichen Hohlkörper gebildet werden, während die Schließkraft z. B. von der Gewichtskraft eines ruhenden Körpers oder von einer gespannten Feder gebildet wird. Bei Erreichen oder Überschreiten der Grenzwerttemperatur wird der Schließvorgang ausgelöst, in dem das Material der Sollbrucheinrichtung schmilzt und der Druck im Sollbruchbereich entweicht. Hierdurch wird die Druckkraft im Hohlkörper abgebaut. Die Schließkraft wird wirksam und kann in Abhängigkeit von der Armaturenkonzeption direkt auf das Absperrelement wirken oder indirekt über eine Betätigungsvorrichtung den Schließvorgang auslösen, so daß der Durchfluß des brennbaren Fluids unterbrochen wird.

Die Ausbildung des Hohlkörpers als Faltenbalg oder als elastisches Druckkissen hat den Vorteil, daß sich beispielsweise ein als Betätigungselement wirkender Körper direkt auf dem Hohlkörper anordnen läßt. Bei einem Druckabfall im Hohlkörper wird dieser von der Gewichtskraft des sich abwärts bewegenden Körpers zusammengedrückt, d. h., die Schließkraft wird wirksam. Anders verhält es sich bei einem vorgespannten Faltenbalg, der sich durch eine Druckbeaufschlagung in seiner Länge ausdehnt und sich bei Druckabnahme wieder zusammenzieht. In diesem Fall ist der Hohlkörper gleichzeitig auch das Betätigungselement, so daß vorteilhafterweise auf ein zusätzliches Element verzichtet werden kann.

Die erfindungsgemäße Anordnung bildet ein selbsttätig wirkendes nahezu wartungsfreies Absperrsystem, wobei die Absperrarmatur im Regelfall eingangsseitig angeordnet ist und im Brandfall den Zustrom von brennbaren Fluiden in die nachfolgend angeordneten Anlagenteile unterbindet. Im Bedarfsfall kann die erfindungsgemäße Schließvorrichtung auch im Ausgangsbereich einer Anlage oder eines bestimmten Anlagenteils angeordnet werden. Als Hohlkörper eignen sich beispielsweise marktgängige volumenveränderliche Druckbehälter aus diversen Materialien. Der Hohlkörper wird in der Regel außerhalb des Armaturengehäuses angeordnet, läßt sich jedoch auch in das Gehäuse integrieren.

Die Sollbrucheinrichtung ist aus einem Material zu fertigen, das den Druckanforderungen standhält und eine Schmelztemperatur aufweist, die der definierten Grenzwerttemperatur entspricht. Die Grenzwerttemperatur ist so zu wählen, daß sie weit unterhalb der Flammentemperatur des im Rohrleitungssystem befindlichen Fluids liegt.

Die Sollbrucheinrichtung ist erfindungsgemäß als Reaktionsleitung ausgebildet, so daß Hohlkörper und Reaktionsleitung ein in sich geschlossenes System bilden. Dieses hat den Vorteil, daß die Reaktionsleitung mit beliebigem Abstand von der Absperrarmatur verlegbar ist, so daß ein in Abstand von der Absperrarmatur auftretender Brand ein Auslösen des Schließvorgangs zur Folge hat. Die Reaktionsleitung läßt sich beispielsweise in einer Meß- und Regelanlage derartig anordnen, daß sie sich über das gesamte Anlagensystem flächendeckend erstreckt. Die Ausbildung als Reaktionsleitung hat den Vorteil, daß sich die Reaktionszeit in bezug auf eine Brandbekämpfung auf ein Minimum reduziert. Reaktionsleitung und Hohlkörper sollten weitestgehend frei von lösbaren Verbindungen sein, damit mögliche Quellen für Undichtigkeiten vermieden werden.

Zum Ausgleich möglicher Leckverluste kann das Hohlkörpersystem z. B. an einen Druckbehälter angeschlossen werden. Dieser kann als Druckpuffer verwendet werden oder einen Druck aufweisen, der höher als der im Hohlkörpersystem ist. Hierbei ist im Anschluß zwischen Druckbehälter und Hohlkörpersystem eine Druckregelarmatur erforderlich.

Insbesondere dann, wenn die Schließvorrichtung in Verbindung mit einer im Ausgangsbereich der Anlage angeordneten Rückströmsicherung oder einer weiteren erfindungsgemäßen Schließvorrichtung eingesetzt wird, kann der vom Schaden betroffene Anlagenbereich schnell und sicher vom übrigen System abgetrennt werden, so daß der Zustrom des Fluids zum Brandherd wirksam verhindert wird. Im übrigen ließe sich dadurch auch der bisher übliche Sicherheitsabstand zwischen Brandarmatur und Anlage verringern.

Nach einem weiteren vorteilhaften Merkmal der Erfindung wird die Schließkraft von einem Betätigungselement aufgebracht, welches an einer Betätigungsvorrichtung angreift. Dadurch wird erreicht, daß die Schließvorrichtung mit handelsüblichen Armaturen unterschiedlicher Bauart (Klappen, Ventile, Schieber etc.) ausgeführt werden kann.

Nach einem weiteren erfindungsgemäßen Merkmal greift der Hohlkörper ebenfalls an der Betätigungsvorrichtung oder direkt an dem Betätigungselement an, so daß die Absperrarmatur auch als Betriebsarmatur genutzt werden kann und sich somit die Kosten für eine zusätzliche Absperrarmatur einsparen lassen.

In Weiterbildung der Erfindung weist der Hohlkörper eine Überwachungseinrichtung auf, welche eine Kontrolle der Funktionsbereitschaft der Schließvorrichtung ermöglicht. Eine einfache Form der Überwachung ist die Druckmessung, wobei hier der Innendruck im Hohlkörper erfaßt wird. Der Meßwert kann angezeigt und/oder in ein komplexes Überwachungssystem übertragen werden, so daß sich Störungen frühzeitig erkennen lassen und die Einleitung von Gegenmaßnahmen erfolgen kann.

Weiterhin läßt sich die Erfindung vorteilhaft ausgestalten, in dem zwei oder mehr Hohlkörper hintereinander und die zugehörigen Reaktionsleitungen parallel zueinander angeordnet sind. Eine derartige Ausführungsform hat den Vorteil, daß systembedingte Fehlauslösungen nahezu ausgeschlossen werden. Eine störungsbedingte Reduzierung des Druckes in einem von zwei oder mehreren Hohlkörpern hat lediglich die Teilschließung der Absperrarmatur und somit maximal eine Druckflußreduzierung zur Folge.

Geht man - wie in der Technik üblich - davon aus, daß systembedingte zeitgleiche Störungen an zwei unabhängig voneinander wirkenden Systemen mit hoher Wahrscheinlichkeit auszuschließen sind, braucht ein störungsbedingter Ausfall der Anlage bei paralleler Ausführung nicht in Betracht gezogen werden. Die Auslösung eines entsprechenden Warnsignals wäre somit ausreichend. Das völlige Schließen der Absperrarmatur kann folglich nur bestimmungsgemäß bei Überschreiten der definierten Grenzwerttemperatur in Folge übermäßiger Hitzeentwicklung (Brand) oder durch Vorsatz erfolgen.

In Weiterbildung der Erfindung ist das Betätigungselement, die Betätigungsvorrichtung oder das Absperrelement mittels einer Arretierung feststellbar, wodurch die selbsttätige Auslösung der Vorrichtung im Fall von Wartungs- oder Reparaturarbeiten verhindert wird. Durch die Arretierung des Betätigungselementes wird fernerhin erreicht, daß die Absperrarmatur unabhängig von der automatischen Schließvorrichtung betätigt werden kann.

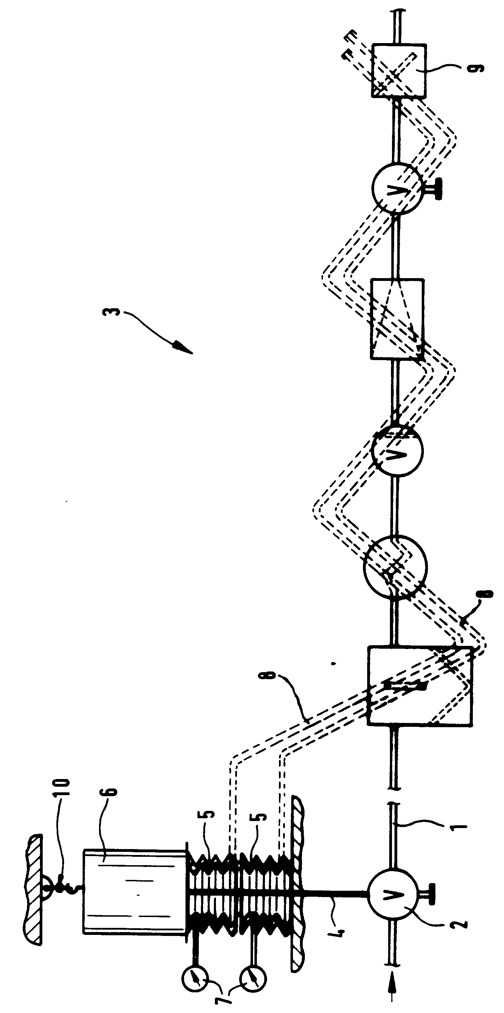

Die Erfindung wird im folgenden anhand eines bevorzugten Ausführungsbeispiels im Zusammenhang mit einer beiliegenden Zeichnung näher erläutert. Die Zeichnung zeigt in einer einzigen Figur den schematischen Aufbau einer Gas-Regelanlage mit einer erfindungsgemäßen Vorrichtung zum Schließen einer Absperrarmatur.

In einer Gasleitung 1 ist eine Absperrarmatur 2 in Form eines Ventiles angeordnet. Diese befindet sich im Eingangsbereich der Gas-Regelanlage, wobei der Sicherheitsabstand zwischen den zur Gas-Regelanlage gehörenden Anlagenteilen 3 und der Absperrarmatur 2 von den jeweiligen Vorschriften, Auflagen und/oder Gegebenheiten abhängig ist.

Das nicht dargestellte Absperrelement (Ventilteller) der Absperrarmatur 2 ist fest mit einer Betätigungsvorrichtung 4 verbunden. Über diese wird das Absperrelement in Offenstellung gehalten, wobei der auf die Betätigungsvorrichtung 4 wirkenden Schließkraft zwei druckluftbeaufschlagte, hintereinander angeordnete Hohlkörper in Form von Faltenbälgen 5 hemmend entgegenwirken. Die Schließkraft wird hier von dem Gewicht eines ruhenden Körpers 6 gebildet, wobei auch andere Lösungen, wie beispielsweise der Einsatz einer gespannten Feder oder die Verwendung vorgespannter Faltenbälge denkbar sind. Jeder der Faltenbälge 5 weist eine den Innendruck messende Meßvorrichtung 7 auf.

Des weiteren weist jeder Faltenbalg 5 eine als Sollbrucheinrichtung ausgebildete Reaktionsleitung 8 in Form einer kleindimensionierten Rohrleitung auf, wobei jeder Faltenbalg 5 mit der zugehörigen Reaktionsleitung 8 ein in sich geschlossenes System bildet. Als Reaktionsleitungen 8 eignen sich beispielsweise handelsübliche Aluminiumrohre oder Schlauchleitungen. Die beiden parallel zueinander angeordneten Reaktionsleitungen 8 sind schlangenlinienartig oberhalb aller zu überwachenden Anlagenteile 3 der Regelanlage angeordnet. Auf die dargestellten Anlagenteile 3, wie Filter, Vorwärmer, Sicherheitsabsperrventil, Druckregler und Absperrarmatur, braucht in diesem Zusammenhang nicht weiter eingegangen werden. Im Ausgang der Regelanlage ist eine Rückströmsicherung 9 angeordnet.

Im Schadensfall, z. B. wenn an einer oder mehreren Stellen der Regelanlage Gas austritt und sich entzündet, wird im Flammenbereich die Grenz- bzw. Schmelztemperatur der Reaktionsleitungen 8 überschritten. Da sich die Reaktionsleitungen 8 aufgrund ihrer Anordnung über die gesamte Regelanlage erstrecken, ist davon auszugehen, daß die thermische Belastung die Reaktionsleitungen 8 sofort und unmittelbar erreichen und diese zumindest im Bereich des Brandherdes schmelzen werden. Schon während des Schmelzvorganges ist davon auszugehen, daß die Reaktionsleitungen 8 dem Innendruck nicht standhalten und bersten, so daß die Druckluft entweichen kann. Durch die Druckabnahme in den Faltenbälgen 5 verringert sich die der Gewichtskraft des Körpers 6 entgegenwirkende Kraft, und der Körper 6 verläßt seine Ruheposition. Er bewegt über die Betätigungsvorrichtung 4 das Absperrelement d. h. der Ventilteller wird in den Ventilsitz gepreßt. Hierdurch wird der Gasdurchfluß unterbrochen und sichergestellt, daß kein weiteres Gas aus dem der Gas-Regelanlage vorgeschalteten Transportsystem zum Brandherd gelangt. Weiterhin wird die Rückströmsicherung 9 wirksam, so daß auch aus dem der Regelanlage nachgeschalteten Leitungssystem kein Brennstoff zum Brandherd zurückströmen kann. Die Absperrarmatur 2 verbleibt solange in einem geschlossenen Zustand, bis eine manuelle Entriegelung erfolgt.

Die parallele Anordnung der Reaktionsleitungen 8 hat den Vorteil, daß systembedingte Fehlauslösungen vermieden werden können. Eine störungsbedingte Reduzierung des Druckes in einem der beiden Faltenbälge 5, beispielsweise durch eine Undichtigkeit hervorgerufen, hätte lediglich eine Teilschließung der Absperrarmatur 2 zur Folge. Diese ließe sich jedoch über eine an die Innendruckmeßvorrichtungen 7 gekoppelte Warnmeldung feststellen, so daß Gegenmaßnahmen eingeleitet werden können. Die Warnmeldung kann ebenso von einem in bzw. an der Absperrarmatur 2 angeordneten Bewegungsmelder abgegeben werden.

Zur Verhinderung einer selbsttätigen Auslösung der Schließvorrichtung ist der Körper 6 mittels einer Arretiervorrichtug 10 feststellbar.

Im Rahmen der Erfindung sind ohne weiteres Abwandlungsmöglichkeiten gegeben. Die Schließvorrichtung läßt sich ohne großen Aufwand mit handelsüblichen Sicherheitsabsperrventilen kombinieren, so daß diese sowohl im Fall von Über-/Unterdruck im nachgeschalteten System als auch bei übermäßigem Temperaturanstieg ausgelöst werden. Im übrigen ist es nicht notwendig, daß der Hohlkörper der Schließkraft direkt entgegenwirkt. Es ist ausreichend, wenn eine durch den Druckfall im Hohlkörper erzeugte Bewegung das Auslösen der Schließkraft bewirkt, d. h. der Hohlkörper eine Art Schalterfunktion ausübt. Des weiteren können mehrere Absperrarmaturen mit Schließvorrichtungen kombiniert sein, wobei alle Schließvorrichtungen über eine gemeinsame Reaktionsleitung miteinander verbunden sind und im Brandfall mehrere Armaturen gleichzeitig geschlossen werden. Die Befüllung des Hohlkörpersystems beschränkt sich nicht lediglich auf Druckluft. Beispielsweise eignen sich insbesondere inerte Gase für die Befüllung. Auch der Einsatz von brennbaren Gasen oder von Flüssigkeiten ist denkbar.

Wird der Hohlkörper als Zylinder mit einer Sollbrucheinrichtung ausgebildet, bewirkt ein Kolben die Veränderbarkeit des Volumens. Der Kolben ist z. B. über eine Kolbenstange mit einer Betätigungsvorrichtung verbunden, an der auch die Schließkraft angreift. Durch die pneumatische Druckbeaufschlagung wird der Kolben in eine Endlage gedrück. Das eingeschlossene Gaspolster wirkt der Schließkraft entgegen und hält so die Absperreinrichtung in Offenstellung. Das Schmelzen der Sollbrucheinrichtung bewirkt einen Druckabfall im Zylinder, so daß die Schließkraft wirksam werden kann, der Kolben seine Endlage verläßt und die Absperreinrichtung mittels der Betätigungsvorrichtung in die Schließposition überführt wird.

## Patentansprüche

1. Absperrvorrichtung, die bei einer definierten Grenzwerttemperatur automatisch schließt, mit einem Absperrelement, das durch mindestens ein eine Schließkraft hemmendes Element in Offenstellung gehalten wird, dadurch gekennzeichnet, daß
die Absperrvorrichtung (2) als die Schließkraft hemmendes Element mindestens einen druckbeaufschlagten volumenveränderlichen Hohlkörper (5) aufweist, der als Faltenbalg oder als Druckkissen ausgebildet ist, und der mindestens eine Sollbrucheinrichtung aufweist, die aus einem Material besteht, dessen Schmelztemperatur auf die definierte Grenzwerttemperatur eingestellt ist.

2. Absperrvorrichtung nach Anspruch 1, dadurch gekennzeichnet, daß
die Sollbrucheinrichtung als Reaktionsleitung (8) ausgebildet ist.

3. Vorrichtung nach Anspruch 1 oder 2, dadurch gekennzeichnet, daß
die Schließkraft von einem Betätigungselement (6) aufgebracht wird, welches an einer Betätigungsvorrichtung (4) angreift.

4. Absperrvorrichtung nach einem der Ansprüche 1 bis 3, dadurch gekennzeichnet, daß
der Hohlkörper (5) an der Betätigungsvorrichtung (4) oder direkt an dem Betätigungselement (6) angreift.

5. Absperrvorrichtung nach einem der Ansprüche 1 bis 4, dadurch gekennzeichnet, daß
der Hohlkörper (5) eine Drucküberwachungseinrichtung (7) aufweist.

6. Absperrvorrichtung nach einem der Ansprüche 1 bis 5, dadurch gekennzeichnet, daß
zwei Hohlkörper (5) hintereinander und die zugehörigen Reaktionsleitungen (8) parallel zueinander angeordnet sind.

7. Absperrvorrichtung nach einem der Ansprüche 1 bis 6, dadurch gekennzeichnet, daß
das Betätigungselement (6) oder die Betätigungsvorrichtung (4) oder das Absperrelement mittels einer Arretiervorrichtung (10) feststellbar ist.

## Claims

1. Shut-off device, which closes automatically at a defined threshold temperature, with a shut-off element which is kept in the open position by at least one element inhibiting a closing force, characterised in that
the shut-off device (2) exhibits, as the element inhibiting the closing force, at least one pressurised hollow body (5) whose volume can be changed and which is designed as a bellows or a pressure pad, and which has at least one predetermined break-off feature which is made of a material whose melt temperature is set to a defined threshold temperature.

2. Shut-off device according to claim 1, characterised in that
the predetermined break-off feature is designed as a reaction line (8).

3. Device according to claim 1 or 2, characterised in that
the closing force is produced by an activation element (6) which acts on an activation device (4).

4. Shut-off device according to any one of claims 1 through 3, characterised in that
the hollow body 5 acts on the activation device (4) or directly on the activation element (6).

5. Shut-off device according to any one of claims 1 through 4, characterised in that
the hollow body (5) exhibits a pressure-monitoring feature (7).

6. Shut-off device according to any one of claims 1 through 5, characterised in that
two hollow bodies (5) are arranged one after the other and the relevant reaction lines (8) parallel to each other.

7. Shut-off device according to any one of claims 1 through 6, characterised in that
the activation element (6) or the activation device (4) or the shut-off element can be fixed by means of a locking device (10).

## Revendications

1. Dispositif pour la fermeture automatique d'une vanne d'arrêt fermant automatiquement lorsqu'une valeur limite de température est atteinte, muni d'un élément de coupure qui est maintenu en position ouverte à l'aide d'au moins un élément ralentissant une force de serrage, caractérisé par le fait que le dispositif pour la fermeture automatique d'une vanne d'arrêt (2) présente comme élément ralentissant la force de serrage au moins un corps creux (5) mis en pression et dont le volume peut être modifié, conçu sous forme de soufflet ou coussin de pression et présentant au moins une partie destinée à la rupture en un matériau dont le point de fusion est réglé à la valeur limite de température définie.

2. Dispositif pour la fermeture automatique d'une vanne d'arrêt selon la revendication 1, caractérisé par le fait que la partie destinée à la rupture est conçue sous forme de conduite de réaction (8).

3. Dispositif pour la fermeture automatique d'une vanne d'arrêt selon l'une des revendications 1 ou 2, caractérisé par le fait que la force de serrage est fournie par un élément d'actionnement (6) qui prend à un dispositif d'actionnement (4).

4. Dispositif pour la fermeture automatique d'une vanne d'arrêt selon l'une des revendications 1 à 3, caractérisé par le fait que le corps creux (5) prend au dispositif d'actionnement (4) ou directement à l'élément d'actionnement (6).

5. Dispositif pour la fermeture automatique d'une vanne d'arrêt selon l'une des revendications 1 à 4, caractérisé par le fait que le corps creux (5) présente un dispositif de contrôle de pression (7).

6. Dispositif pour la fermeture automatique d'une vanne d'arrêt selon l'une des revendications 1 à 5, caractérisé par le fait que deux corps creux (5) sont disposés l'un derrière l'autre et les conduites de réaction (8) correspondantes disposées parallèlement l'une par rapport à l'autre.

7. Dispositif pour la fermeture automatique d'une vanne d'arrêt selon l'une des revendications 1 à 6, caractérisé par le fait que l'élément d'actionnement (6) ou le dispositif d'actionnement (4) ou l'élément de coupure peut être arrêté à l'aide d'un dispositif d'arrêt (10).
